# FASCICULE DE BREVET EUROPEEN

(11) **EP 2 535 648 B1**
(45) Date de publication et mention de la délivrance du brevet: **13.04.2016**
(21) Numéro de dépôt: 12171906.6
(22) Date de dépôt: 14.06.2012
(51) Int. Cl.: F24D 19/10, F24F 11/00, F24D 3/02

(54) **Radiateur pour une installation de chauffage central et installation de chauffage central comprenant un tel radiateur**
Heizkörper für eine Zentralheizanlage, und einen solchen Heizkörper umfassende Zentralheizanlage
Radiator for central-heating facility and central-heating facility comprising such a radiator

(30) Priorité: 14.06.2011 FR 1155170
(43) Date de publication de la demande: 19.12.2012
(73) Titulaire: Thermor Pacific, 45140 Saint Jean de la Ruelle (FR)
(72) Inventeur: Fourmentin, Dorian, 45000 Orleans (FR)
(74) Mandataire: Petit, Maxime

(56) Documents cités:
- AT-B- 413 059
- GB-A- 2 323 938
- US-A- 4 058 740
- US-A- 4 060 123
- US-A- 4 101 886

## Description

La présente invention concerne un radiateur pour une installation de chauffage central et une installation de chauffage central comprenant au moins un tel radiateur.

Il est connu une installation de chauffage central comprenant un radiateur dont l'alimentation en fluide chaud est régulée en fonction d'une loi temporelle pour adapter la température dans une pièce au rythme de vie d'un ou plusieurs individus. La loi temporelle indique pour cela les heures de la journée pendant lesquelles l'installation de chauffage doit être mise en marche et le radiateur alimenté en fluide chaud. La loi temporelle indique également les heures de la journée pendant lesquelles, au contraire, l'installation doit être mise en veille et le radiateur non alimenté.

Ce type d'installation est adapté à un rythme de vie régulier d'un ou plusieurs individus. Cependant, toute modification de rythme de vie fait apparaître la limite d'une telle installation. Ainsi, dans le cas où un individu est présent en dehors d'un créneau horaire préprogrammé de manière correspondante, la pièce n'est pas chauffée à la température de confort de l'individu, qui le ressent. Au contraire, quand l'utilisateur est absent de la pièce alors que la loi de régulation implique le chauffage de la pièce durant le créneau horaire correspondant, alors la pièce est chauffée inutilement, ce qui engendre une dépense énergétique inutile. Des solutions alternatives sont connues des documents GB 2 323 938 et AT 413059. Le document GB 2 323 938 est considéré comme étant l'état de la technique le plus proche de l'objet de la revendication 1.

Le but de la présente invention est de fournir une installation de chauffage central ne présentant pas les inconvénients précités.

A cette fin, la présente invention propose un radiateur pour une installation de chauffage central comprenant des moyens pour modifier le débit de fluide alimentant le radiateur, un capteur de présence d'un individu et une unité électronique de commande commandant lesdits moyens pour modifier le débit en fonction de la détection d'individus par le capteur de présence.

Suivant des modes de réalisation préférés, l'invention comprend une ou plusieurs des caractéristiques suivantes :
- les moyens pour modifier le débit de fluide comprennent une électrovanne ;
- les moyens pour modifier le débit de fluide comprennent un circulateur ;
- le capteur de présence comprend au moins l'un parmi un capteur de mouvement, un capteur de luminosité, un capteur de mouvement, une caméra et une association d'au moins deux tels capteurs ;
- le radiateur comprend des moyens de détermination de la température ambiante, les moyens pour modifier le débit étant commandés pour que la température ambiante corresponde à une température de consigne ;
- l'unité électronique de commande commande lesdits moyens pour modifier le débit en modifiant la température de consigne en fonction de la détection de présence d'individus par le capteur de présence ;
- l'unité électronique de commande commande les moyens pour modifier le débit en commandant le passage d'un débit défini en fonction d'un débit maximal pouvant alimenter le radiateur ;
- le radiateur comprend en outre une interface homme-machine permettant à un utilisateur de modifier le fonctionnement du radiateur, l'interface homme-machine étant de préférence en relation fonctionnelle avec l'unité électronique de commande ; et
- le radiateur comprend en outre une mémoire de stockage d'une programmation de fonctionnement du radiateur, laquelle programmation de fonctionnement est modifiable par auto-apprentissage en fonction de la détection de présence d'un individu réalisée par le capteur de présence.

Selon un autre aspect, l'invention propose une installation de chauffage central, comprenant :
- un générateur de chauffage central pour chauffer un fluide,
- au moins un radiateur tel que décrit ci-avant dans toutes ses combinaisons, et
- un circuit d'alimentation en fluide reliant le radiateur au générateur de chauffage de central.

De préférence, l'installation de chauffage central comprend une pluralité de radiateurs, au moins deux radiateurs étant munis chacun d'un capteur de présence distinct.

De manière préférée, l'unité électronique de commande et le capteur de présence de chaque radiateur agissent indépendamment du fonctionnement des autres radiateurs de l'installation de chauffage central et/ou du générateur de chauffage central.

D'autres caractéristiques et avantages de l'invention apparaîtront à la lecture de la description qui suit d'un mode de réalisation préféré de l'invention, donnée à titre d'exemple et en référence au dessin annexé.
La figure 1 représente un schéma d'un premier exemple d'installation de chauffage central.
La figure 2 représente un schéma d'un deuxième exemple d'installation de chauffage central.
La figure 3 représente schématiquement un premier exemple de système de régulation d'un radiateur pouvant être mis en oeuvre dans l'installation de la figure 1 ou de la figure 2.
La figure 4 représente schématiquement un deuxième exemple de système de régulation d'un radiateur pouvant être mis en oeuvre dans l'installation de la figure 1 ou de la figure 2.

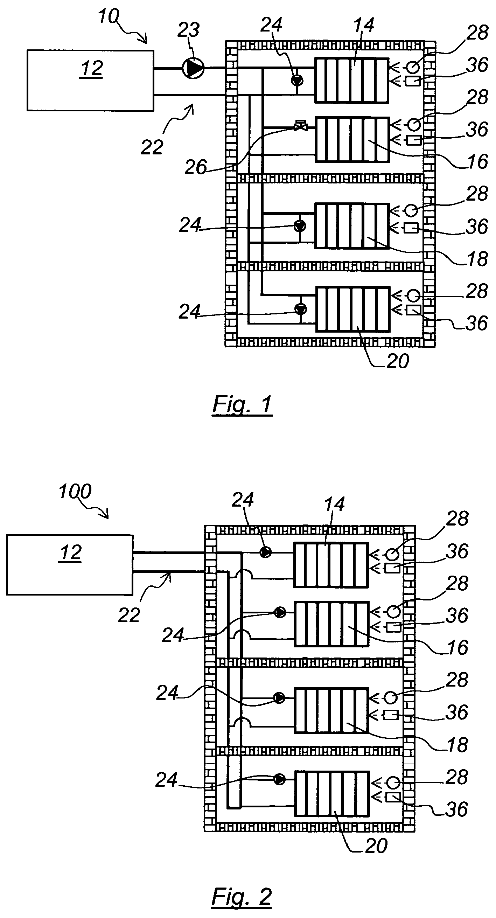

Telle qu'illustrée sur la figure 1, une installation de chauffage central 10 comprend un générateur de chauffage central 12 pour chauffer un fluide, une pluralité de radiateurs 14, 16, 18, 20 et un circuit 22 d'alimentation en fluide reliant les radiateurs 14, 16, 18, 20 au générateur de chauffage central 12. Les radiateurs sont disposés dans différentes pièces d'une habitation. Les radiateurs chauffent les différentes pièces lorsqu'ils sont parcourus par le fluide chauffé par le générateur de chauffage central 12.

Le circuit d'alimentation 22 comporte ici un conduit principal d'alimentation commun à tous les radiateurs et un conduit principal de retour, lui aussi commun à tous les radiateurs. Chaque radiateur est par ailleurs associé à :
- une conduite d'alimentation le reliant au conduit principal d'alimentation pour être alimenté en fluide chaud, et à
- une conduite de retour le reliant au conduit de retour pour évacuer le fluide ayant traversé le radiateur.

Le circuit d'alimentation 22 est ici muni d'un circulateur principal 23, par exemple une pompe, destiné à assurer un débit de fluide chauffé par le générateur de chauffage central 12 dans le conduit principal d'alimentation du circuit d'alimentation.

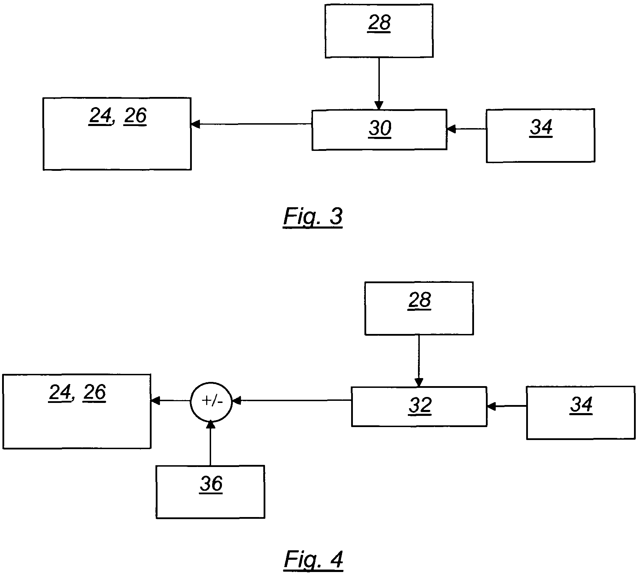

Chacun des radiateurs 14, 16, 18 et 20 comprend des moyens 24, 26 pour modifier le débit de fluide qui l'alimente - c'est-à-dire qui le parcourt - un capteur de présence d'un individu 28 et une unité électronique de commande 30, 32 (voir figure 3 et 4) commandant lesdits moyens 24, 26 pour modifier le débit en fonction de la détection d'individus par le capteur de présence.

Les moyens 24, 26 pour modifier le débit de fluide qui alimente les radiateurs peuvent être de différents types. Deux types différents sont présentés ci-après à titre d'exemple.

Un premier tel moyen prend la forme d'un circulateur décentralisé 24, par exemple un pompe. Le circulateur décentralisé pompe tout ou partie du fluide chaud destiné à alimenter le radiateur dans une branche en parallèle du radiateur. Le circulateur décentralisé permet ainsi de réguler le débit de fluide chaud qui traverse effectivement le radiateur. Le circulateur décentralisé peut être associé à des moyens pour réguler la communication de fluide entre le conduit d'alimentation du circuit d'alimentation 22 avec l'intérieur du radiateur, notamment adaptés à empêcher cette communication de fluide.

Ainsi, le circulateur décentralisé peut être commandé afin qu'il pompe le fluide chaud à son arrivée vers le radiateur, empêchant ainsi que ce fluide ne traverse le radiateur et permette ainsi à celui-ci d'émettre de la chaleur.

Bien entendu, en réglant la puissance du circulateur décentralisé et/ou les moyens pour réguler la communication de fluide entre le conduit d'alimentation et le radiateur, il est possible de régler la quantité de fluide chaud arrivant du circuit d'alimentation 22 qui alimente effectivement le radiateur. On régule par la même, la quantité de fluide chaud qui retourne vers le générateur de chauffage central sans avoir traversé le radiateur.

Un tel circulateur décentralisé permet ainsi de régler la puissance calorifique émise par le radiateur, notamment en contrôlant la quantité de fluide chaud pompée par la pompe décentralisée.

Un deuxième moyen pour modifier le débit de fluide qui alimente les radiateurs est une électrovanne 26. De manière connue en soi, une électrovanne est une vanne à commande électrique qui peut ainsi réguler voire stopper le débit de fluide la traversant.

Une telle électrovanne 26 permet ainsi de régler la puissance calorifique émise par le radiateur en contrôlant la quantité de fluide chaud qui traverse l'électrovanne et, par la suite, alimente le radiateur associé.

Dans l'installation 10, chaque radiateur 14, 16, 18, 20 comprend en outre un capteur de présence 28.

Ce capteur de présence 28 peut notamment comprendre au moins l'un parmi un capteur de mouvement, un capteur de luminosité, un capteur de mouvement, une caméra et une association d'au moins deux tels capteurs.

Ces capteurs de présence sont mis en oeuvre pour commander les radiateurs. La mise en oeuvre de ces capteurs de présence permet en effet de réguler la puissance calorifique émise en fonction de la détection de la présence d'un individu dans le local dans lequel est ménagé chacun des radiateurs. Ceci permet d'une part d'assurer un meilleur confort à l'utilisateur (notamment par rapport à une loi de programmation préprogrammée et non modifiable), et des économies d'énergies, puisque le fonctionnement du radiateur peut être limité dans le cas où aucun individu n'est détecté et que, par conséquent, il est inutile de chauffer une pièce. Il est à noter ici que chaque radiateur peut être commandé indépendamment des autres, ce qui permet d'optimiser les dépenses énergétiques nécessaires au chauffage des différentes pièces.

La figure 2 représente une variante 100 de l'installation de chauffage central de la figure 1. Sur cette figure, les éléments identiques ou de fonction identique aux éléments de la figure 1 porte le même signe de référence et ne sont pas décrits plus en détails.

En fait, l'installation 100 de la figure 2 se distingue de l'installation 10 de la figure 1 par la configuration du circuit d'alimentation 22 des radiateurs. En effet, ici, le circuit d'alimentation 22 comprend une boucle d'alimentation sur laquelle sont disposés des piquages, ou dérivations, associés chacun à un radiateur. Le circuit d'alimentation 22 est ici dépourvu de circulateur principal 23.

Dans le cas de l'installation 100, chaque radiateur 14, 16, 18, 20 comprend un circulateur décentralisé 24 adapté à pomper depuis la boucle du circuit d'alimentation, une quantité variable de fluide chaud destiné à traverser le radiateur. La quantité de fluide chaud pompé est déterminée en fonction de la détection de présence d'un individu par le capteur de présence 28.

Il est à noter ici que les deux installations 10, 100 sont des exemples et que de nombreuses variantes accessibles à l'Homme de l'art sont envisageables. En particulier, l'installation 100 pourrait être munie d'un circulateur principal 23 comme l'installation 10. Il serait alors possible d'utiliser des électrovannes 26 dans les radiateurs 14, 16, 18, 20 pour réguler le débit de fluide chaud qui les traverse.

De manière plus générale, les moyens pour modifier le débit de fluide qui alimente les radiateurs sont de préférence choisis en fonction de la présence ou non d'un circulateur principal 23. Si un tel circulateur principal est présent, on utilise de préférence des électrovannes pour réguler le débit de fluide chaud alimentant le radiateur. Dans le cas contraires, l'utilisation de circulateurs décentralisés est nécessaire.

Il est présenté ci-après à titre d'exemple, deux systèmes de régulation de la puissance calorifique émise par les radiateurs en fonction de la présence ou non d'un individu dans la pièce.

Selon un premier exemple de tel système, illustré sur la figure 3, le capteur de présence 28 indique à une unité électronique de commande 30 la présence détectée d'un individu. En fonction de cette détection de présence, l'unité électronique de commande 30 commande les moyens pour modifier le débit de fluide chaud alimentant le radiateur. Par exemple, l'unité électronique de commande peut commander les moyens pour modifier le débit en commandant le passage d'un débit défini en fonction d'un débit maximal pouvant alimenter le radiateur.

De préférence, l'unité électronique de commande 30 est également en liaison fonctionnelle avec une interface homme-machine 34. Ainsi, un utilisateur du radiateur peut commander une puissance calorifique émise correspondant à son confort. Cette commande de la puissance calorifique de confort est réalisée par l'intermédiaire de l'interface homme-machine 34, via l'unité électronique de commande 30. Dans ce cas, l'unité électronique peut moduler la consigne entrée au moyen de l'interface homme-machine en fonction de la détection de présence d'un individu dans la pièce.

La figure 4 illustre un deuxième système de régulation de la puissance calorifique émise par les radiateurs. Selon ce deuxième exemple, l'unité électronique de commande 32 commande une température de consigne en fonction du signal de sortie du capteur de présence 28. Dans ce système un capteur de température ambiante 36 est mis en oeuvre. En effet, dans le cas de ce système de régulation, les moyens pour régler le débit de fluide alimentant les radiateurs sont commandés de manière que la température mesurée au moyen du capteur de température ambiante 36 soit sensiblement égale à la température de consigne émise par l'unité électronique de commande.

Il est à signaler ici également que le système de régulation peut comporter une interface homme-machine 34, lequel permet à un utilisateur de commander une température de consigne. Un utilisateur peut également commander plusieurs température de consigne (notamment une température de consigne quand un individu est présent et une température de consigne quand aucun individu n'est présent). Dans ce cas, l'unité électronique de commande modifie la température de consigne indiquée par l'utilisateur en fonction de la détection d'un individu.

Il est à noter que l'installation de chauffage central 10 de la figure 1 est telle que l'unité électronique de commande et le capteur de présence de chaque radiateur agissent indépendamment du fonctionnement des autres radiateurs de l'installation de chauffage central et/ou du générateur de chauffage central.

Selon un exemple particulièrement intéressant, les radiateurs peuvent également comporter une mémoire de stockage d'une programmation de fonctionnement du radiateur, laquelle programmation de fonctionnement est modifiée par auto-apprentissage en fonction de la détection de présence d'un individu réalisée par le capteur de présence.

Les installations de chauffage central et les radiateurs présentés améliorent la régulation de la température pièce par pièce d'un chauffage central. Ils augmentent ainsi le confort de l'utilisateur par l'augmentation de la puissance calorifique des radiateurs en cas de présence non prévue par une éventuelle programmation. En outre, les radiateurs et les installations de chauffage central décrits permettent de réaliser des économies en diminuant la puissance calorifique des radiateurs en cas d'absence d'utilisateur.

## Revendications

1. Radiateur (14, 16, 18, 20) pour une installation de chauffage central (10, 100), comprenant des moyens pour modifier le débit de fluide alimentant le radiateur (24, 26), **caractérisé en ce que** le radiateur comprend un capteur de présence d'un individu (28) et une unité électronique de commande (30, 32) commandant lesdits moyens pour modifier le débit (24, 26) en fonction de la détection d'individus par le capteur de présence (28).

2. Radiateur selon la revendication 1, dans lequel les moyens pour modifier le débit de fluide comprennent une électrovanne (26).

3. Radiateur selon la revendication 1 ou 2, dans lequel les moyens pour modifier le débit de fluide comprennent un circulateur (24).

4. Radiateur selon l'une quelconque des revendications précédentes, dans lequel le capteur de présence (28) comprend au moins l'un parmi un capteur de mouvement, un capteur de luminosité, un capteur de mouvement, une caméra et une association d'au moins deux tels capteurs.

5. Radiateur selon l'une quelconque des revendications précédentes, comprenant des moyens de détermination de la température ambiante (36), les moyens pour modifier le débit (24, 26) étant commandés pour que la température ambiante corresponde à une température de consigne.

6. Radiateur selon la revendication 5, dans lequel l'unité électronique de commande (32) commande lesdits moyens pour modifier le débit (24, 26) en modifiant la température de consigne en fonction de la détection de présence d'individus par le capteur de présence (28).

7. Radiateur selon l'une quelconque des revendications précédentes, dans lequel l'unité électronique de commande (30) commande les moyens pour modifier le débit (24, 26) en commandant le passage d'un débit défini en fonction d'un débit maximal pouvant alimenter le radiateur.

8. Radiateur selon l'une quelconque des revendications précédentes, comprenant en outre une interface homme-machine (34) permettant à un utilisateur de modifier le fonctionnement du radiateur, l'interface homme-machine (34) étant de préférence en relation fonctionnelle avec l'unité électronique de commande (30, 32).

9. Radiateur selon l'une quelconque des revendications précédentes, comprenant en outre une mémoire de stockage d'une programmation de fonctionnement du radiateur, laquelle programmation de fonctionnement est modifiable par auto-apprentissage en fonction de la détection de présence d'un individu réalisée par le capteur de présence (28).

10. Installation de chauffage central (10, 100), comprenant :
- un générateur de chauffage central (12) pour chauffer un fluide,
- au moins un radiateur (14, 16, 18, 20) selon l'une quelconque des revendications 1 à 8,
- un circuit d'alimentation en fluide (22) reliant le radiateur (14, 16, 18, 20) au générateur de chauffage de central (12).

11. Installation de chauffage central (10, 100) selon la revendication 10, comprenant une pluralité de radiateurs (14, 16, 18, 20), dans laquelle au moins deux radiateurs (14, 16, 18, 20) sont munis chacun d'un capteur de présence (28) distinct.

12. Installation de chauffage central (10, 100) selon la revendication 10 ou 11, dans laquelle l'unité électronique de commande (30, 32) et le capteur de présence (28) de chaque radiateur (14, 16, 18, 20) agissent indépendamment du fonctionnement des autres radiateurs (14, 16, 18, 20) de l'installation de chauffage central et/ou du générateur de chauffage central (12).

## Patentansprüche

1. Heizkörper (14, 16, 18, 20) für eine Zentralheizungsanlage (10, 100), umfassend Mittel, um den Fluiddurchfluss, welcher den Heizkörper (24, 26) versorgt, zu verändern, **dadurch gekennzeichnet, dass** der Heizkörper einen Präsenzsensor eines Individuums (28) und eine elektronische Steuereinheit (30, 32), welche die Mittel zur Durchflussänderung (24, 26) in Abhängigkeit von der Detektion des Individuums durch den Präsenzsensor (28) steuert, umfasst.

2. Heizkörper nach Anspruch 1, wobei die Mittel zur Fluiddurchflussänderung ein Elektroventil (26) umfassen.

3. Heizkörper nach Anspruch 1 oder 2, wobei die Mittel zur Fluiddurchflussänderung einen Zirkulator (24) umfassen.

4. Heizkörper nach einem der vorangehenden Ansprüche, wobei der Präsenzsensor (28) mindestens einen von einem Bewegungssensor, einem Lichtstärkesensor, einem Bewegungssensor, einer Kamera und eine Kombination von mindestens zwei derartigen Sensoren umfasst.

5. Heizkörper nach einem der vorangehenden Ansprüche, umfassend Bestimmungsmittel der Umgebungstemperatur (36), wobei die Mittel zur Fluiddurchflussänderung (24, 26) gesteuert sind, damit die Umgebungstemperatur einer Referenztemperatur entspricht.

6. Heizkörper nach Anspruch 5, wobei die elektronische Steuereinheit (32) die Mittel zur Fluiddurchflussänderung (24, 26) durch Änderung der Referenztemperatur in Abhängigkeit von der Präsenzdetektion von Individuen durch den Präsenzsensor (28) steuert.

7. Heizkörper nach einem der vorangehenden Ansprüche, wobei die elektronische Steuereinheit (30) die Mittel zur Fluiddurchflussänderung (24, 26) durch Steuerung des Durchgangs eines in Abhängigkeit von einem maximalen Durchflusses, der den Heizkörper versorgen kann, festgelegten Durchflusses steuert.

8. Heizkörper nach einem der vorangehenden Ansprüche, umfassend ferner eine Mensch-Maschine-Schnittstelle (34), die es einem Benutzer erlaubt, den Betrieb des Heizkörpers zu ändern, wobei die Mensch-Maschine-Schnittstelle (34) vorzugsweise in funktioneller Beziehung mit der elektronischen Steuereinheit (30, 32) steht.

9. Heizkörper nach einem der vorangehenden Ansprüche, umfassend ferner einen Speicher einer Betriebsprogrammierung des Heizkörpers, wobei die Betriebsprogrammierung durch Selbstlernen in Abhängigkeit von der von dem Präsenzsensor (28) durchgeführten Präsenzdetektion eines Individuums veränderbar ist.

10. Zentralheizungsanlage (10, 100), umfassend:
- einen Zentralheizungsgenerator (12), um ein Fluid zu erhitzen,
- mindestens einen Heizkörper (14, 16, 18, 20) nach einem der Ansprüche 1 bis 8,
- einen Fluidversorgungskreis (22), welcher den Heizkörper (14, 16, 18, 20) mit dem Zentralheizungsgenerator (12) verbindet.

11. Zentralheizungsanlage (10, 100) nach Anspruch 10, umfassend eine Vielzahl von Heizkörpern (14, 16, 18, 20), wobei mindestens zwei Heizkörper (14, 16, 18, 20) jeweils mit einem verschiedenen Präsenzsensor (28) ausgestattet sind.

12. Zentralheizungsanlage (10, 100) nach Anspruch 10 oder 11, wobei die elektronische Steuereinheit (30, 32) und der Präsenzsensor (28) jedes Heizkörpers (14, 16, 18, 20) unabhängig vom Betrieb der anderen Heizkörper (14, 16, 18, 20) der Zentralheizungsanlage und/oder des Zentralheizungsgenerators (12) agieren.

## Claims

1. A radiator (14, 16, 18, 20) for a central heating installation (10, 100), comprising means for modifying the flow rate of fluid supplying the radiator (24, 26), **characterized in that** the radiator comprises a sensor detecting the presence of an individual (28) and an electronic control unit (30, 32) commanding said means to modify the flow rate (24, 26) based on the detection of individuals by the presence sensor (28).

2. The radiator according to claim 1, wherein the means for modifying the fluid flow rate comprise a solenoid valve (26).

3. The radiator according to claim 1 or 2, wherein the means for modifying the fluid flow rate comprise a circulator (24).

4. The radiator according to any one of the preceding claims, wherein the presence sensor (28) comprises at least one from among a motion sensor, a brightness sensor, a motion sensor, a camera and a combination of at least two such sensors.

5. The radiator according to any one of the preceding claims, comprising means for determining the ambient temperature (36), the means for modifying the flow rate (24, 26) being controlled so that the ambient temperature corresponds to a setpoint temperature.

6. The radiator according to claim 5, wherein the electronic control unit (32) controls said means to modify the flow rate (24, 26) by modifying the setpoint temperature as a function of the detection of the presence of individuals by the presence sensor (28).

7. The radiator according to any one of the preceding claims, wherein the electronic control unit (30) controls the means for modifying the flow rate (24, 26) by commanding the passage of a flow rate defined as a function of a maximum flow rate able to supply the radiator.

8. The radiator according to any one of the preceding claims, further comprising a man-machine interface (34) allowing the user to modify the operation of the radiator, the man-machine interface (34) preferably being in a functional relationship with the electronic control unit (30, 32).

9. The radiator according to any one of the preceding claims, further comprising a memory for storing an operating program for the radiator, said operating program being able to be modified by self-learning based on the detection of the presence of an individual by the presence sensor (28).

10. A central heating installation (10, 100), comprising:
- a central heating generator (12) for heating a fluid,
- at least one radiator (14, 16, 18, 20) according to any one of claims 1 to 8,
- a fluid supply circuit (22) connecting the radiator (14, 16, 18, 20) to the central heating generator (12).

11. The central heating installation (10, 100) according to claim 10, comprising a plurality of radiators (14, 16, 18, 20), in which at least two radiators (14, 16, 18, 20) are each provided with a separate presence sensor (28).

12. The central heating installation (10, 100) according to claim 10 or 11, wherein the electronic control unit (30, 32) and the presence sensor (28) of each radiator (14, 16, 18, 20) act independently of the operation of the other radiators (14, 16, 18, 20) of the central heating installation and/or the central heating generator (12).
